# EUROPEAN PATENT APPLICATION

(11) **EP 4 560 962 A1**
(43) Date of publication of application: **28.05.2025**
(21) Application number: 23851517.5
(22) Date of filing: 10.07.2023
(51) Int. Cl.: H04L 5/00

(54) **DATA TRANSMISSION METHOD AND DEVICE**

(30) Priority: 10.08.2022 CN 202210955268
(71) Applicant: Huawei Technologies Co., Ltd., Shenzhen, Guangdong 518129 (CN)
(72) Inventor: YANG, Ruonan, Shenzhen, Guangdong 518129 (CN); CHEN, Ying, Shenzhen, Guangdong 518129 (CN); WANG, Jun, Shenzhen, Guangdong 518129 (CN)
(74) Representative: Körber, Martin Hans
(86) International application number: PCT/CN2023/106546
(87) International publication number: WO 2024/032292

(57) **Abstract**

This application discloses a data transmission method and an apparatus. The method includes: A network device sends first information and second information, where the first information indicates scheduling for X transport blocks TBs, the second information indicates a HARQ feedback configuration of the X TBs, the HARQ feedback configuration includes providing a HARQ feedback or providing no HARQ feedback, the second information occupies Y bits, and Y<X. A terminal device determines a target time domain position based on the received first information and the received second information, where the target time domain position is a time domain position at which the terminal device needs to monitor a physical downlink control channel PDCCH. According to embodiments of this application, a binding indication is performed on a HARQ feedback configuration for multi-TB scheduling, to reduce resource overheads of the HARQ configuration. In addition, impact of round trip time on a transmission process can be reduced by indicating to provide no HARQ feedback.

## Description

This application claims priority to Chinese Patent Application No. 202210955268.5, filed with the China National Intellectual Property Administration on August 10, 2022 and entitled "DATA TRANSMISSION METHOD AND APPARATUS", which is incorporated herein by reference in its entirety.

### TECHNICAL FIELD

This application relates to the field of wireless communication technologies, and in particular, to a data transmission method and an apparatus.

### BACKGROUND

A hybrid automatic repeat request (hybrid automatic repeat request, HARQ) is a method for improving data transmission reliability. A data packet that is incorrectly decoded is stored in a HARQ buffer and combined with a retransmitted data packet that is subsequently received, to obtain a data packet that is more reliable than a data packet obtained through separate decoding (this is a "soft combination" process). Then, the combined data packet is decoded. If decoding still fails, a process of "requesting retransmission and then performing soft combination" is repeated. A receive end determines, through cyclic redundancy check (cyclic redundancy check, CRC), whether an error occurs on a received data packet, and indicates, by using a HARQ feedback, whether the CRC check succeeds.

In a HARQ process, data is sent according to a stop-and-wait protocol. To be specific, after sending a transport block (transport block, TB), a transmit end stops and waits for a HARQ feedback. However, the transmit end stops and waits for a HARQ feedback after each time of transmission, resulting in a low throughput. Therefore, a plurality of parallel stop-and-wait protocol processes are used. When waiting for acknowledgment information, the transmit end may use another process to continue to send data, so that the data can be transmitted continuously.

In a non-terrestrial network (non-terrestrial network, NTN) scenario, round trip time is much longer than that on the ground, waiting time according to the HARQ stop-and-wait protocol is very long, and a throughput is very low. Therefore, some processes can be configured as requiring no HARQ feedback, to reduce a throughput loss caused by long round trip time. In an internet of things (IoT, Internet of things) NTN scenario, a maximum of two HARQ processes are usually configured for a terminal. However, how to provide a HARQ feedback for the HARQ process of the terminal and how to monitor a corresponding physical downlink control channel (physical downlink control channel, PDCCH) are still not specifically configured.

### SUMMARY

Embodiments of this application provide a data transmission method and an apparatus, to perform a binding indication on a HARQ feedback configuration for multi-TB scheduling, to reduce resource overheads of the HARQ configuration. In addition, impact of round trip time on a transmission process can be reduced by indicating to provide no HARQ feedback.

According to a first aspect, a data transmission method is provided. The method includes: A terminal device receives first information, where the first information indicates scheduling for X transport blocks TBs. The terminal device receives second information, where the second information indicates a HARQ feedback configuration of the X TBs, the HARQ feedback configuration includes providing a HARQ feedback or providing no HARQ feedback, the second information occupies Y bits, and Y<X. The terminal device determines a target time domain position based on the first information and the second information, where the target time domain position is a time domain position at which the terminal device needs to monitor a physical downlink control channel PDCCH.

It can be learned that, in this embodiment of this application, during scheduling for the X TBs, the second information indicates the HARQ feedback configuration, and the second information occupies Y bits. Because Y is less than X, in comparison with a case in which scheduling for each TB occupies one bit to indicate a HARQ feedback configuration, in this embodiment, resource overheads occupied by the feedback configuration can be reduced. In addition, the HARQ feedback configuration is performed for multi-TB scheduling, so that no HARQ feedback needs to be provided in some cases, thereby reducing a communication delay and improving communication efficiency.

In a possible design, X=2 and Y=1.

In a possible design, before the terminal device receives the second information, the method further includes: receiving third information, where the third information includes a feedback configuration of each of the X TBs. That the second information indicates a HARQ feedback configuration of the X TBs includes: The second information indicates that a feedback configuration of a part of the X TBs is used as the HARQ feedback configuration of the X TBs.

In this embodiment of this application, the third information is used for delivering the feedback configuration of each of the X TBs, and the second information indicates that the feedback configuration of the part of the TBs in the HARQ feedback configuration of the X TBs is used as the HARQ feedback configuration of the X TBs. In other words, during multi-TB scheduling, a manner of a HARQ feedback configuration for single-TB scheduling may be reused, and no additional HARQ feedback configuration needs to be performed for multi-TB scheduling, to reduce signaling changes that may be caused by the HARQ feedback configuration. In addition, the second information indicates that the feedback configuration for scheduling for the part of the TBs in scheduling for the X single TBs is used as the HARQ feedback configuration of the X TBs, so that the HARQ feedback configuration of (a part or all of) the X TBs is bound, thereby reducing resource overheads of the indication information.

In a possible design, the first information is carried in downlink control information DCI, and the second information is carried in radio resource control RRC signaling.

In a possible design, the first information and the second information are carried in DCI.

In this embodiment of this application, the second information is carried in the RRC signaling, so that a unified configuration of the HARQ feedback configuration can be implemented, thereby reducing resource overheads for performing the HARQ feedback configuration. The second information is carried in the DCI, so that a network device can perform a HARQ feedback configuration for multi-TB scheduling performed by using a single piece of DCI, to improve flexibility of the HARQ feedback configuration.

In a possible design, if the HARQ feedback configuration is providing no HARQ feedback, the target time domain position determined based on the first information and the second information does not include a subframe n+k-p1 to a subframe n+k-1 or a subframe t+1 to a subframe t+p2, where n is a subframe in which the DCI is detected, n+k is a subframe in which data scheduled by using the DCI starts to be received, t is a subframe in which transmission of a last TB in the plurality of TBs ends, p1 is time for decoding the DCI, and p2 is time for decoding the data.

In a possible design, if the HARQ feedback configuration is providing a HARQ feedback, the target time domain position determined based on the first information and the second information does not include a subframe n to a subframe n+m+p3, where the subframe n is a subframe in which the DCI is detected, n+m is a subframe in which sending of the HARQ feedback ends, and p3 is time for decoding the HARQ feedback.

In this embodiment of this application, for multi-TB scheduling, if HARQ feedback configuration for all processes is providing no HARQ feedback, the terminal device determines a time domain position at which monitoring is performed on a PDCCH, and excludes a time domain position used for transmitting the DCI, a time domain position used for transmitting the data scheduled by using the DCI, a time domain position used for decoding the DCI, and a time domain position used for decoding the data, to release the processes in advance and ensure data transmission efficiency. However, if the HARQ feedback configuration for all the processes is providing a HARQ feedback, the terminal device may determine not to monitor the PDCCH before feedback content is decoded by a network device, to improve efficiency for the terminal device to determine the target time domain position.

In a possible design, when the second information is carried in the RRC, the method further includes: receiving the third information, where the third information is carried in the DCI and indicates whether to change the HARQ feedback configuration indicated by the second information; and determining the target time domain position based on the first information and the change performed on the second indication information by using the third information.

In this embodiment of this application, the HARQ feedback configuration is first semi-statically indicated by the RRC, and then the HARQ feedback configuration is changed by using the indication information in the DCI, so that the HARQ feedback configuration can be indicated by using fewer resource overheads. In addition, the HARQ feedback configuration is changed by using the DCI as required, to ensure flexibility of indicating the HARQ feedback configuration.

According to a second aspect, a data transmission method is provided. The method includes: sending first information, where the first information indicates scheduling for X transport blocks TBs; and sending second information, where the second information indicates a HARQ feedback configuration of the X TBs, the HARQ feedback configuration includes providing a HARQ feedback or providing no HARQ feedback, the second information occupies Y bits, and Y<X.

In a possible design, X=2 and Y=1.

In a possible design, before the sending second information, the method further includes: sending third information, where the third information includes a feedback configuration of each of the X TBs. That the second information indicates a HARQ feedback configuration of the X TBs includes: The second information indicates that a feedback configuration of a part of the X TBs is used as the HARQ feedback configuration of the X TBs.

In a possible design, the first information is carried in downlink control information DCI, and the second information is carried in radio resource control RRC signaling.

In a possible design, the first information and the second information are carried in DCI.

In a possible design, the second information is carried in the radio resource control RRC signaling, and the method further includes:
sending the third information, where the third information is carried in the DCI and indicates whether to change the HARQ feedback configuration indicated by the second information.

In a possible design, before the sending first information, the method further includes: determining that a multi-TB scheduling capability is configured for a terminal device by using RRC signaling.

According to a third aspect, a data transmission method is provided. The method includes: A terminal device receives first information from a network device, where the first information indicates scheduling for X transport blocks TBs. The terminal device determines a HARQ feedback configuration of the X TBs based on the first information and a type of the network device, where the HARQ feedback configuration includes providing a HARQ feedback or providing no HARQ feedback. The terminal device determines a target time domain position, where the target time domain position is a time domain position at which the terminal device needs to monitor a physical downlink control channel PDCCH.

In this embodiment of this application, when receiving an indication indicating to perform multi-TB scheduling, the terminal device determines the HARQ feedback configuration with reference to the type of the network device that sends the indication information, and mainly determines a HARQ feedback configuration for all corresponding processes in a multi-TB scheduling process for the satellite base station, to further determine the time domain position at which the terminal device monitors the PDCCH. In the process, for a communication process between the terminal device and the satellite base station, the HARQ feedback configuration can be determined without receiving additional HARQ feedback configuration information, thereby improving communication efficiency.

In a possible design, the type of the network device is a satellite base station or a terrestrial base station.

In a possible design, if the type of the network device is a satellite base station, the HARQ feedback configuration is providing no HARQ feedback.

In this embodiment of this application, it is determined that the HARQ feedback configuration of the satellite base station is providing no HARQ feedback, so that impact of RTT on the communication process can be reduced, thereby ensuring timeliness and accuracy of the communication process.

In a possible design, if the HARQ feedback configuration is providing no HARQ feedback, the target time domain position does not include a subframe n+k-p1 to a subframe n+k-1 or a subframe t+1 to a subframe t+p2, where n is a subframe in which DCI is detected, n+k is a subframe in which data scheduled by using the DCI starts to be received, t is a subframe in which transmission of a last TB in the plurality of TBs ends, p1 is time for decoding the DCI, and p2 is time for decoding the data.

In a possible design, if the HARQ feedback configuration is providing a HARQ feedback, the target time domain position does not include a subframe n to a subframe n+m+p3, where the subframe n is a subframe in which DCI is detected, n+m is a subframe in which sending of the HARQ feedback ends, and p3 is time for decoding the HARQ feedback.

According to a fourth aspect, a communication apparatus is provided, and is used in a terminal device. The apparatus includes:
a transceiver module, configured to receive first information, where the first information indicates scheduling for X transport blocks TBs, where
the transceiver module is further configured to receive second information, where the second information indicates a HARQ feedback configuration of the X TBs, the HARQ feedback configuration includes providing a HARQ feedback or providing no HARQ feedback, the second information occupies Y bits, and Y<X; and
a processing module, configured to determine a target time domain position based on the first information and the second information, where the target time domain position is a time domain position at which the terminal device needs to monitor a physical downlink control channel PDCCH.

In a possible design, X=2 and Y=1.

In a possible design, before receiving the second information, the transceiver module is further configured to receive third information, where the third information includes a feedback configuration of each of the X TBs. That the second information indicates a HARQ feedback configuration of the X TBs includes: The second information indicates that a feedback configuration of a part of the X TBs is used as the HARQ feedback configuration of the X TBs.

In a possible design, the first information is carried in downlink control information DCI, and the second information is carried in radio resource control RRC signaling.

In a possible design, the first information and the second information are carried in DCI.

In a possible design, if the HARQ feedback configuration is providing no HARQ feedback, the target time domain position determined based on the first information and the second information does not include a subframe n+k-p1 to a subframe n+k-1 or a subframe t+1 to a subframe t+p2, where n is a subframe in which the DCI is detected, n+k is a subframe in which data scheduled by using the DCI starts to be received, t is a subframe in which transmission of a last TB in the plurality of TBs ends, p1 is time for decoding the DCI, and p2 is time for decoding the data.

In a possible design, if the HARQ feedback configuration is providing a HARQ feedback, the target time domain position determined based on the first information and the second information does not include a subframe n to a subframe n+m+p3, where the subframe n is a subframe in which the DCI is detected, n+m is a subframe in which sending of the HARQ feedback ends, and p3 is time for decoding the HARQ feedback.

In a possible design, when the second information is carried in the RRC, the transceiver module is further configured to receive the third information, where the third information is carried in the DCI and indicates whether to change the HARQ feedback configuration indicated by the second information. The processing module is further configured to determine the target time domain position based on the first information and the change performed on the second indication information by using the third information.

According to a fifth aspect, a communication apparatus is provided, and is used in a network device. The apparatus includes:
a transceiver module, configured to send first information, where the first information indicates scheduling for X transport blocks TBs.

The transceiver module is further configured to send second information, where the second information indicates a HARQ feedback configuration of the X TBs, the HARQ feedback configuration includes providing a HARQ feedback or providing no HARQ feedback, the second information occupies Y bits, and Y<X.

In a possible design, X=2 and Y=1.

In a possible design, before receiving the second information, the transceiver module is further configured to send third information, where the third information includes a feedback configuration of each of the X TBs. That the second information indicates a HARQ feedback configuration of the X TBs includes: The second information indicates that a feedback configuration of a part of the X TBs is used as the HARQ feedback configuration of the X TBs.

In a possible design, the first information is carried in downlink control information DCI, and the second information is carried in radio resource control RRC signaling.

In a possible design, the first information and the second information are carried in DCI.

In a possible design, the second information is carried in the radio resource control RRC signaling, and the transceiver module is further configured to:
send the third information, where the third information is carried in the DCI and indicates whether to change the HARQ feedback configuration indicated by the second information.

In a possible design, before the first information is sent, a processing module is further configured to determine that a multi-TB scheduling capability is configured for a terminal device by using RRC signaling.

According to a sixth aspect, a communication apparatus is provided, and is used in a terminal device. The apparatus includes:
a transceiver module, configured to receive first information from a network device, where the first information indicates scheduling for X transport blocks TBs; and
a processing module, configured to determine a HARQ feedback configuration of the X TBs based on the first information and a type of the network device, where when the type of the network device is a satellite base station, the HARQ feedback configuration is providing no HARQ feedback.

The processing module is further configured to determine a target time domain position, where the target time domain position is a time domain position at which the terminal device needs to monitor a physical downlink control channel PDCCH.

In a possible design, the type of the network device is a satellite base station or a terrestrial base station.

In a possible design, if the type of the network device is a satellite base station, the HARQ feedback configuration is providing no HARQ feedback.

In a possible design, if the HARQ feedback configuration is providing no HARQ feedback, the target time domain position does not include a subframe n+k-p1 to a subframe n+k-1 or a subframe t+1 to a subframe t+p2, where n is a subframe in which DCI is detected, n+k is a subframe in which data scheduled by using the DCI starts to be received, t is a subframe in which transmission of a last TB in the plurality of TBs ends, p1 is time for decoding the DCI, and p2 is time for decoding the data.

In a possible design, if the HARQ feedback configuration is providing a HARQ feedback, the target time domain position does not include a subframe n to a subframe n+m+p3, where the subframe n is a subframe in which DCI is detected, n+m is a subframe in which sending of the HARQ feedback ends, and p3 is time for decoding the HARQ feedback.

According to a seventh aspect, an embodiment of this application provides a network device or a terminal device, including:
a memory, configured to store instructions; and
at least one processor, coupled to the memory.

When the at least one processor executes the instructions, the instructions enable the processor to perform the method according to any one of the first aspect, the second aspect, or the third aspect.

According to an eighth aspect, an embodiment of this application provides a chip system, including a processor. The processor is coupled to a memory, and the memory is configured to store a program or instructions. When the program or the instructions are executed by the processor, the chip system is enabled to implement the method according to any one of the first aspect, the second aspect, or the third aspect.

Optionally, the chip system further includes an interface circuit, and the interface circuit is configured to exchange code instructions to the processor.

Optionally, there may be one or more processors in the chip system, and the processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to a ninth aspect, an embodiment of this application provides a computer-readable storage medium. The computer-readable storage medium stores a computer program or instructions. When the computer program or the instructions are executed, a computer is enabled to perform the method according to the first aspect, the second aspect, or the third aspect.

According to a tenth aspect, an embodiment of this application provides a computer program product. When a computer reads and executes the computer program product, the computer is enabled to perform the method according to any one of the possible implementations of the first aspect, the second aspect, or the third aspect.

According to an eleventh aspect, an embodiment of this application provides a communication system. The communication system includes the apparatus according to the first aspect and/or the second aspect.

### BRIEF DESCRIPTION OF DRAWINGS

To describe technical solutions in embodiments of this application or in the conventional technology more clearly, the following briefly describes the accompanying drawings for describing embodiments.
FIG. 1 is a diagram of a typical system architecture of an NR NTN communication network according to an embodiment of this application;
FIG. 2 is a diagram of a timing relationship according to an embodiment of this application;
FIG. 3A is a flowchart of a data transmission method according to an embodiment of this application;
FIG. 3B is a diagram of a multi-TB scheduling process according to an embodiment of this application;
FIG. 3C is a diagram of a target time domain position according to an embodiment of this application;
FIG. 4A is a flowchart of another data transmission method according to an embodiment of this application;
FIG. 4B is a diagram of a communication connection according to an embodiment of this application;
FIG. 5 is a block diagram of a structure of a communication apparatus according to an embodiment of this application; and
FIG. 6 is a diagram of a hardware structure of a communication apparatus according to an embodiment of this application.

### DESCRIPTION OF EMBODIMENTS

In the specification, claims, and accompanying drawings of this application, the terms "first", "second", "third", "fourth" and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification indicates that a particular feature, structure, or characteristic described with reference to this embodiment may be included in at least one embodiment of this application. The phrase appearing at various positions in the specification does not necessarily refer to a same embodiment, and is not an independent or alternative embodiment exclusive from another embodiment. It is explicitly and implicitly understood by a person skilled in the art that embodiments described in the specification may be combined with another embodiment.

"A plurality of" means two or more. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

The terms in embodiments of this application are first described with reference to the figures.

Non-terrestrial network (non-terrestrial network, NTN) mobile communication: NTN communication (namely, satellite communication) is introduced into a new radio (new radio, NR) system. Compared with terrestrial network (terrestrial network, TN) mobile communication, NTN mobile communication uses a high earth orbit satellite, a medium earth orbit satellite, and a low earth orbit satellite to achieve wide-area or even global coverage and provide undifferentiated communication services for global users. NTN mobile communication and 5G NR are combined to complement each other, thereby jointly constituting a sea-land-air-space integrated communication network with seamless global coverage, to satisfy various requirements of a user for ubiquitous services. This is an important development direction of future communication. Convergence of an NTN network and 5G gives full play to advantages to provide more comprehensive and higher-quality services for the user. Main features are as follows. (1) In remote areas, aircraft, or ocean ships that cannot be covered by a 5G terrestrial network, a satellite can provide economical and reliable network services, to extend the network to areas that cannot be reached by the terrestrial network. (2) The satellite can provide a continuous network connection for an internet of things device and users on mobile carriers such as an airplane, a ship, a train, and a car. Convergence of the satellite and 5G can greatly enhance a service capability of a 5G system in this aspect. (3) The satellite has an excellent broadcast/multicast capability to provide an efficient data distribution service for a network edge and a user terminal. Compared with an early satellite mobile communication system, development of current satellite mobile communication has two characteristics. Miniaturization of mobile terminals: A plurality of mobile communication terminals including a handset are supported. Broadbandization of communication services: In addition to a conventional narrowband voice service, a high-speed data service and an internet multimedia communication service are provided.

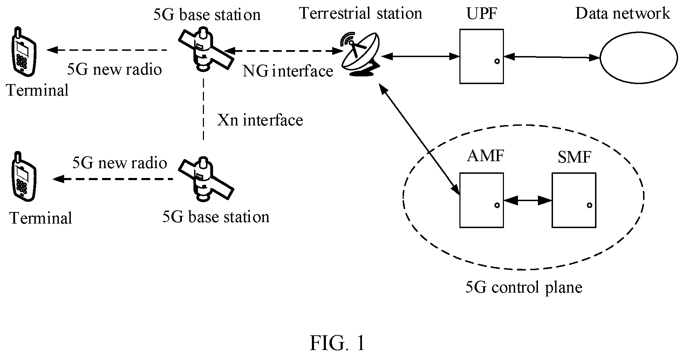

FIG. 1 is a diagram of a typical system architecture of an NR NTN communication network according to an embodiment of this application. As shown in FIG. 1, in the NR NTN communication network, a terrestrial mobile terminal accesses a network via 5G NR. A 5G base station is deployed on a satellite, and is connected to a terrestrial core network through a radio link. In addition, a radio link exists between satellites, to complete signaling exchange and user data transmission between base stations. Network elements in FIG. 1 and interfaces of the network elements are described as follows.

The terminal is a mobile device that supports 5G NR, and may also be referred to as a terminal device (terminal device), user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. The terminal device may access a satellite network through an air interface and initiate services such as a call and internet access.

The 5G base station is a radio access network (radio access network, RAN) node (or device) that connects the terminal to a wireless network in a 5G network, and may also be referred to as an access network device, a network device, or a continuously evolved NodeB (gNB). The 5G base station mainly provides a wireless access service, schedules a radio resource for an access terminal, and provides a reliable wireless transmission protocol, a reliable data encryption protocol, and the like.

A 5G core network is a device in a core network (core network, CN) that provides service support for the terminal device in the 5G network. The 5G core network is configured to provide services such as user access control, mobility management, session management, user security authentication, and charging. The 5G core network includes a plurality of functional units, which may be classified into control plane functional entities and data plane functional entities. An authentication management function (authentication management function, AMF) is responsible for user access management, security authentication, and mobility management. A user plane function (user plane function, UPF) is responsible for managing functions such as user plane data transmission and traffic statistics.

A terrestrial station is responsible for forwarding signaling and service data between a satellite base station and the 5G core network.

5G NR is a radio link between the terminal and the base station.

An Xn interface is an interface between the 5G base station and the base station, and is mainly used for signaling exchange such as handover.

An NG interface is an interface between the 5G base station and the 5G core network, and is mainly for exchanging signaling such as non-access stratum (non-access stratum, NAS) signaling of the core network and user service data.

Internet of things (Internet of things, IoT): The internet of things enables a physically independent object to implement a network connection function for information exchange and communication, to implement functions such as object identification, monitoring, positioning, and control. The IoT may be widely used in scenarios such as smart meter reading, precise farming, industrial automation, a smart building, a POS terminal, environment monitoring, and telemedicine. An internet of things device is often installed in a place where there is no power supply, and may need to be powered entirely by a battery, and costs of replacing the battery may be very high. In some cases, a battery life even determines a life of the entire device. Therefore, battery life optimization is very important for the internet of things device. In addition, a coverage condition of the internet of things device may be very poor. For example, the internet of things device is in a basement. Therefore, (indoor) coverage needs to be significantly improved to satisfy a requirement of the internet of things. To cope with different radio channel conditions, an NB-IoT defines a maximum of three coverage enhancement levels (coverage enhancement levels, CE levels). A CE level 0 corresponds to normal coverage (with a best channel condition). A CE level 2 corresponds to a worst channel condition, and it is considered that coverage may be very poor. Different CE levels mainly affect a quantity of times a message is repeatedly sent. If a channel condition is poor, the message needs to be repeatedly sent for several times. In the NB-IoT, repeated transmission needs to be supported in both an uplink and a downlink. The terminal uses decoding results of repeated transmission as an entire hybrid automatic repeat request (hybrid automatic repeat request, HARQ) process to provide a HARQ feedback.

HARQ feedback: A HARQ is a method for improving data transmission reliability. A data packet that is incorrectly decoded is stored in a HARQ buffer and combined with a retransmitted data packet that is subsequently received, to obtain a data packet that is more reliable than a data packet obtained through separate decoding (this is a "soft combination" process). Then, the combined data packet is decoded. If decoding still fails, a process of "requesting retransmission and then performing soft combination" is repeated. A receive end determines, through cyclic redundancy check (cyclic redundancy check, CRC), whether an error occurs on a received data packet, and indicates whether the CRC check succeeds, that is, provides a HARQ feedback.

In a HARQ process, data is sent according to a stop-and-wait protocol. To be specific, after sending a transport block (transport block, TB), a transmit end stops and waits for a HARQ feedback. However, the transmit end stops and waits for a HARQ feedback after each time of transmission, resulting in a low throughput. Therefore, a plurality of parallel stop-and-wait protocol processes are used. When waiting for acknowledgment information, the transmit end may use another process to continue to send data, so that the data can be transmitted continuously.

The following describes the conventional technology.

It is considered that round trip time of a satellite is much longer than that on the ground, waiting time according to the HARQ stop-and-wait protocol is very long, and a throughput is very low. Therefore, for an NR NTN, a maximum quantity of processes is increased from 16 to 32. In addition, some processes can be configured as not requiring a feedback, to reduce a throughput loss caused by long round trip time.

Because a terminal capability of the narrowband internet of things (Narrow Band Internet of Things, NB-IoT) is limited, in the conventional technology, it is specified that a maximum quantity of HARQ processes of the IoT in the downlink is 2, and the maximum quantity is determined by a higher-layer configuration parameter twoHARQ-ProcessesConfig. In addition, to increase the throughput, the NB-IoT further supports scheduling a plurality of TBs by using one piece of downlink control information (downlink control information, DCI). During multi-TB scheduling, meanings of most fields in the DCI remain unchanged, but a meaning of an original one-bit (bit) field HARQ process number indicating a process number is represented as a new data indicator (new data indicator, NDI) of a second TB, in other words, indicates whether the second TB is newly transmitted or retransmitted. A meaning of an original NDI field indicates whether a first TB is newly transmitted or retransmitted. During multi-TB scheduling, it is considered, by default, that a process number corresponding to the first TB is 0, and a process number corresponding to the second TB is 1. In addition, based on a corresponding higher-layer parameter configuration, HARQ feedbacks of two TBs may be bound for transmission only when a transmission manner of the two TBs is interleaved transmission. Based on the HARQ stop-and-wait protocol, it is clear that, when a plurality of TBs are scheduled by using one piece of DCI, multi-TB scheduling can be re-performed only after feedbacks of the two TBs are completely received.

To not increase complexity of the terminal, in the conventional technology, it is discussed that there is no feedback for a HARQ of the NB-IoT, to reduce impact caused by round trip time (round trip time, RTT). The following several solutions are provided for how to indicate whether a HARQ process of the terminal requires a feedback.
(1) Whether each process of the terminal requires a feedback is semi-statically indicated by a higher-layer signaling configuration, where signaling is at a terminal level or a cell level. (2) Whether each process of the terminal requires a feedback is dynamically indicated by DCI for scheduling data. (3) Whether each process of the terminal requires a feedback is implicitly indicated based on a quantity of repetitions of the data.

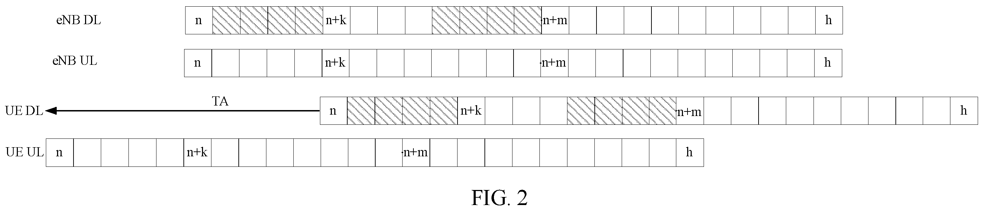

In addition, to reduce power consumption of the terminal, for a timing relationship of scheduling, refer to FIG. 2. FIG. 2 is a diagram of a timing relationship according to an embodiment of this application. As shown in FIG. 2, a base station (gNB) downlink (downlink, DL), a base station uplink (uplink, UL), a UE DL, and a UE UL are included. The base station DL and the UE DL are links used for transmitting same content, and a difference lies in that for content transmitted in a same downlink subframe, there is a transmission delay difference between the base station DL and the UE DL. The UE UL and the base station UL are used for transmitting same content. When performing uplink sending, UE may ensure, by using a timing advance (Timing advance, TA), that a base station receives data in an expected uplink subframe. Therefore, there is a TA time difference between same subframes of the UE DL and the UE UL. A subframe n is a subframe of DCI for scheduling data, and is carried on a narrowband physical downlink control channel (narrowband physical downlink control channel, NPDCCH) (a type of the DL). A subframe n+k is a start subframe for scheduling data, and is carried on a narrowband physical downlink shared channel (narrowband physical downlink shared channel, NPDSCH) (a type of the DL). A subframe h is an uplink subframe in which the UE sends a HARQ feedback of data, and is carried on a narrowband physical uplink shared channel (narrowband physical uplink shared channel, NPUSCH) (a type of the UL). A subframe n+m is a corresponding downlink subframe that is time-aligned with the uplink subframe h, in other words, there is a TA time difference between the downlink subframe n+m and a downlink subframe h. The base station does not deliver, in subframes identified by using blocks marked with slashes, DCI for scheduling data. The subframes specifically include subframes after the subframe in which the base station delivers the DCI and before the subframe in which the base station delivers the data scheduled by using the DCI, and subframes after a subframe in which the base station completes delivering data of a single TB and before a subframe in which the terminal sends the HARQ feedback of the data. Based on a specification in the protocol, the terminal also does not need to perform blind detection on the NPDCCH in these subframes. Before the base station delivers the DCI, the UE receives the TA sent by the base station, to determine a time domain position for blindly detecting the DCI.

There are defects in the conventional technology.

If a single-TB scheduling manner is reused for multi-TB scheduling, the following cases may occur.
(1) Neither of two processes require a feedback.
   If both two process numbers are configured as not requiring a HARQ feedback, during multi-TB scheduling, neither of two TBs require a feedback. However, in NTN wireless communication, because TA adjustment information is carried on a MAC CE, and it has been determined that the MAC CE needs to be transmitted by using a feedback-enabled process (in other words, a HARQ feedback needs to be provided), when the MAC CE needs to be transmitted, a HARQ feedback configuration needs to be updated (where a case in which neither of the two process numbers require a feedback is updated to a case in which one of the process numbers requires a feedback). If configuration signaling is semi-statically indicated in RRC, frequent update is required, and signaling overheads are excessively high; or if configuration signaling is dynamically indicated, because two TBs correspond to two processes, two bits need to be introduced to respectively indicate whether the two processes require feedbacks, and the terminal needs to additionally search for a DCI format of a length during blind detection.
(2) A process feedback is disabled, and a process feedback is enabled.
   It is assumed that, in two processes, a feedback of a process with ID0 is disabled and a feedback of a process with ID1 is enabled. In an IoT system with only two processes, if there is a TB always requiring a feedback for multi-TB scheduling, before a network side receives the feedback, because the process with ID1 is occupied, a next round of multi-TB scheduling cannot be performed. As a result, benefits such as continuous data transmission caused by disabling a HARQ feedback no longer exist.
(3) Both two processes are configured as requiring a feedback.

It is assumed that both the two processes are configured as requiring a feedback. Because both two process numbers are occupied, it is clear that, the base station schedules new data only after HARQ feedbacks that are sent by the terminal and that are for the two processes are received and decoded by the base station. Compared with a timing relationship of single-TB scheduling in an existing specification, multi-TB scheduling has a corresponding timing relationship for scheduling for each TB, and each timing relationship has a corresponding blind detection occasion. In this process, a quantity of blind detection occasion is increased, and power consumption is further increased.

In conclusion, it is assumed that a HARQ feedback configuration of single-TB scheduling is reused for multi-TB scheduling. In this case, for a TB-IoT system, there are defects regardless of whether feedbacks are provided or no feedback is provided for the two processes, or a feedback is provided for one process and no feedback is provided for the other process.

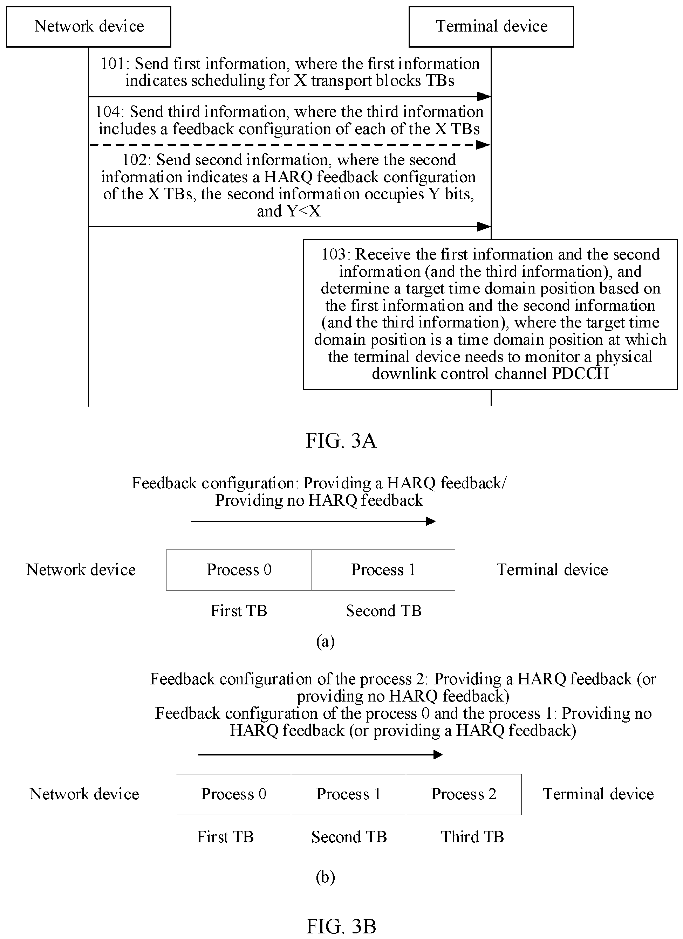

Based on this, FIG. 3A is a flowchart of a data transmission method according to an embodiment of this application. As shown in FIG. 3A, the method includes the following steps.

101: A network device sends first information, where the first information indicates scheduling for X transport blocks TBs.

A terminal device in this embodiment of this application is a terminal device that performs communication based on an IoT protocol. That is, the terminal device is an IoT terminal. The terminal device in the following descriptions includes this meaning. Details are not described in a specific embodiment. Similarly, the network device is a network device that performs communication based on the IoT protocol. Further, the network device in this embodiment of this application is an NTN network device. The network device described in the method embodiment corresponding to FIG. 3A includes this meaning. Details are not described below again. The network device may send the first information to the terminal device to indicate scheduling for the X TBs. In other words, one piece of DCI is used for scheduling the X TBs. The terminal device performs decoding to obtain data only when the terminal device receives all the X TBs sent by the network device. The X TBs may be different TBs, or may be different incremental redundancy versions of a same TB, but respectively correspond to X HARQ processes. X is a value greater than or equal to 2. The first indication information indicates to perform multi-TB scheduling.

102: The network device sends second information, where the second information indicates a HARQ feedback configuration of the X transport blocks, the HARQ feedback configuration includes providing a HARQ feedback or providing no HARQ feedback, the second information occupies Y bits, and Y<X.

The network device may send the second information to the terminal device to indicate the HARQ feedback configuration of the X TBs, to be specific, indicate whether the terminal device needs to provide a HARQ feedback for the X TBs scheduled by using one piece of DCI. The second information occupies the Y bits, and Y<X. In other words, compared with a case in which each TB occupies a 1-bit HARQ feedback configuration, in this embodiment of this application, a quantity of bits occupied by the HARQ feedback configuration is less than a quantity of TBs. Therefore, overheads for the HARQ feedback configuration can be reduced.

Optionally, X=2 and Y=1. In other words, one piece of DCI sent by the network device is used for scheduling for two TBs, and for scheduling for the two TBs, the network device indicates, by using 1-bit information, whether the terminal device needs to provide a HARQ feedback for scheduling for the two TBs.

FIG. 3B is a diagram of a multi-TB scheduling process according to an embodiment of this application. As shown in (a) in FIG. 3B, when X=2, Y=1. To be specific, two processes used for scheduling for two TBs use one HARQ feedback configuration, which is providing a HARQ feedback or providing no HARQ feedback.

In some other cases, when X>2, Y may be 1, or may be greater than 1. As shown in (b) in FIG. 3B, X=3 and Y=2. A process 0 and a process 1 are respectively used for transmitting a first TB and a second TB, and share one HARQ feedback configuration. A process 2 used for transmitting a third TB uses a separate HARQ feedback configuration.

It can be learned that, in this embodiment of this application, for a communication process between the IoT terminal device and the NTN network device, there is a characteristic of a slow channel change. Channels on which multi-TB scheduling is performed correspond to similar channel parameters and similar channel quality. Therefore, for a plurality of processes used for multi-TB scheduling, a HARQ feedback configuration corresponding to the plurality of processes may correspond to a same configuration. In this way, overheads for the HARQ feedback configuration can be reduced.

Optionally, before the terminal device receives the second information (in other words, before the network device sends the second information), the method further includes: 104: The network device sends third information, where the third information includes a feedback configuration of each of the X TBs. That the second information indicates a HARQ feedback configuration of the X TBs includes: The second information indicates that a feedback configuration of a part of the X TBs is used as the HARQ feedback configuration of the X TBs. The terminal device determines the HARQ feedback configuration of the X TB based on the received first information, the received second information, and the received third information, and further determines a target time domain position.

In the conventional technology, the network device may perform a separate HARQ feedback configuration for a single TB scheduled by using each piece of the DCI. In this embodiment of this application, the method may be reused. To be specific, a HARQ feedback configuration is performed for each TB (where there is no limitation on an execution sequence of step 101 and step 104). A difference lies in that, in this embodiment of this application, the network device indicates, by using the first information, scheduling for the X TBs. In other words, the same DCI is used for scheduling the X TBs. In this case, in the X TBs scheduled by using the same DCI, a HARQ feedback configuration of a part of the TBs may be that a HARQ feedback needs to be provided, and a HARQ feedback configuration of another part of the TBs may be that no HARQ feedback needs to be provided. If a HARQ feedback is provided in this manner, before transmission of a last TB in the X TBs scheduled by using the same DCI is completed, a process number corresponding to a TB that is transmitted first cannot be released. In this case, even if a HARQ feedback configuration corresponding to the TB that is transmitted first is providing no HARQ feedback, an effect of reducing round trip time cannot be achieved.

Based on this consideration, the HARQ feedback configuration of the X TBs during multi-TB scheduling may be mapped to a HARQ feedback configuration of a part of the TBs (one or more TBs).

Examples are as follows. (1) The HARQ feedback configuration of the X TBs is mapped to a HARQ feedback configuration of one TB. It is assumed that the network device configures, by using the third information, HARQ feedback configurations for scheduling for two TBs to be 0 and 1 respectively. To be specific, for scheduling for a TB 1, no HARQ feedback is provided, and for scheduling for a TB 2, a feedback needs to be provided. The second indication information indicates, by using "1", that a HARQ feedback configuration of a first TB is used as a feedback configuration for multi-TB scheduling. In this case, the HARQ feedback configuration corresponding to the X TBs is 0.
(2) The HARQ feedback configuration of the X TBs is mapped to a HARQ feedback configuration of a plurality of single TBs. It is assumed that the network device configures, by using the third information, HARQ feedback configurations for scheduling for four TBs to be 0, 1, 0, and 1 respectively. The second indication information indicates, by using "2", "1", and "0", feedback configurations for multi-TB scheduling. In this case, the HARQ feedback configuration corresponding to the X TBs is as follows: A HARQ feedback configuration of a first TB is 1, and a HARQ feedback configuration of a second TB is 0. In addition, the second indication information may indicate, by using "0", that a HARQ feedback configuration of a subsequent TB is the same as a HARQ feedback configuration of a previous TB. In other words, HARQ feedback configurations of a third TB and a fourth TB are the same as the HARQ feedback configuration of the second TB, and are both 0.
(3) The HARQ feedback configuration of the X TBs is a default value, and the second indication information indicates a HARQ feedback configuration different from the default value. For example, the default value of the HARQ feedback configuration of the X TBs may be 0. In other words, it is considered, by default, that no HARQ feedback needs to be provided in the multi-TB scheduling process. However, considering that an overhead transmission delay corresponding to a first transmitted TB in the multi-TB scheduling process is longer than that corresponding to a subsequent TB, a HARQ feedback configuration of the first transmitted TB may reuse a HARQ feedback configuration of a single TB configured by using the third information. For example, the third configuration information is for configuring that a HARQ feedback configuration of a fourth TB (the last TB) is 1, and the second indication information indicates, by using "4", that a HARQ feedback configuration of a first TB in the X TBs is the same as the HARQ feedback configuration of the fourth TB configured by using the third information, and is also 1.

It can be learned that, in this embodiment of this application, the third information is used for delivering the feedback configuration of each of the X TBs, and the second information indicates that the feedback configuration of the part of the TBs in the HARQ feedback configuration of the X TBs is used as the HARQ feedback configuration of the X TBs. In other words, during multi-TB scheduling, a manner of a HARQ feedback configuration for single-TB scheduling may be reused, and no additional HARQ feedback configuration needs to be performed for multi-TB scheduling, to reduce signaling changes that may be caused by the HARQ feedback configuration. In addition, the second information indicates that the feedback configuration for scheduling for the part of the TBs in scheduling for the X single TBs is used as the HARQ feedback configuration of the X TBs, so that the HARQ feedback configuration of (a part or all of) the X TBs is bound, thereby reducing resource overheads of the indication information.

Optionally, an implementation may be further included. After step 101 and step 104 are performed, step 103a is performed (not shown in the figure): The terminal device determines the feedback configuration of the X TBs based on the first information, the third information, and preset information, and further determines the target time domain position.

The preset information may be a manner that is of determining the feedback configuration of the X TBs during multi-TB scheduling and that is agreed upon by the network device and the terminal device in advance. For example, it is agreed, by default, that the feedback configuration of the X TBs is providing no HARQ feedback. Alternatively, it is agreed that when the feedback configuration of the X TBs configured in the third information is not completely the same, it is considered, by default, that the feedback configuration of the first TB is used as the feedback configuration of the X TBs.

Generally, step 105 and step 102 are parallel steps. To be specific, step 102 does not need to be performed when step 105 is performed. Similarly, step 105 is not performed when step 102 is performed. In some cases, assuming that the preset information for determining the feedback configuration of the X TBs is included, and the network device sends the second information to the terminal device, the feedback configuration of the X TBs is determined based on content indicated by the second information.

It can be learned that, in this embodiment, when receiving the HARQ feedback configuration of each TB in multi-TB scheduling, and receiving indication information for performing multi-TB scheduling, the terminal device may directly determine the HARQ feedback configuration for multi-TB scheduling with reference to the preset information. There is no need to perform any additional configuration and signaling indication for a process of determining the HARQ feedback configuration for multi-TB scheduling, to reduce signaling or resource overheads of the process.

Optionally, the first information is carried in downlink control information DCI, and the second information is carried in radio resource control RRC signaling.

Optionally, the first information and the second information are carried in DCI.

The first information and the second information are sent in two manners.
(1) The first information is a Number of scheduled TB for Unicast field in the DCI, where a value of the field is 1, indicating scheduling for the X TBs.
   Second information: In RRC signaling npdsch-MultiTB-Config, one piece of signaling is added to be used as the HARQ feedback configuration for multi-TB scheduling, where the signaling may be specifically "multiTB-HARQfeedback", and a corresponding value may be "enabled" or "disabled", which indicates that a HARQ feedback needs to be provided or no HARQ feedback needs to be provided.
(2) The first information is a Number of scheduled TB for Unicast field in the DCI, where a value of the field is 1, indicating scheduling for the X TBs.

Second information: A 1-bit flag (flag) in the DCI is used as the HARQ feedback configuration for multi-TB scheduling. For example, if the flag is 0, it indicates that no feedback needs to be provided; or if the flag is 1, it indicates that a feedback needs to be provided.

In addition, the third information may also be carried in the DCI. In other words, when the network device indicates the terminal device to perform scheduling for the X TBs, the third information indicates how to obtain, based on the second information, the HARQ feedback configuration corresponding to the X TBs.

In this embodiment of this application, the second information is carried in the RRC signaling, so that a unified configuration of the HARQ feedback configuration can be implemented, thereby reducing resource overheads for performing the HARQ feedback configuration. The second information is carried in the DCI, so that a network device can perform a HARQ feedback configuration for multi-TB scheduling performed by using a single piece of DCI, to improve flexibility of the HARQ feedback configuration.

Optionally, before the first information is sent, the method further includes: determining that a multi-TB scheduling capability is configured for the terminal device by using RRC signaling.

The network device sends the first information to indicate to perform multi-TB scheduling. However, before sending the first information, the network device needs to determine that the multi-TB scheduling capability is configured for the terminal device. The network device may configure the multi-TB scheduling capability for the terminal device by using the RRC signaling. Specifically, when the network device configures higher-layer signaling npdsch-MultiTB-Config of the terminal device as "enabled", it indicates that the network device configures the multi-TB scheduling capability for the terminal device, and the network device can perform multi-TB scheduling, in other words, can send the first information to the terminal device.

103: The terminal device receives the first information and the second information, and determines the target time domain position based on the first information and the second information, where the target time domain position is a time domain position at which the terminal device needs to monitor a physical downlink control channel PDCCH.

After receiving the first information and the second information, the terminal device may determine whether a HARQ feedback needs to be provided for the X TBs. Correspondingly, the terminal device may determine a time domain position at which the network device may deliver the DCI or data, and further determine the time domain position at which the terminal device needs to monitor the PDCCH.

Optionally, if the HARQ feedback configuration is providing no HARQ feedback, the target time domain position determined based on the first information and the second information does not include a subframe n+k-p1 to a subframe n+k-1 or a subframe t+1 to a subframe t+p2, where n is a subframe in which the DCI is detected, n+k is a subframe in which data scheduled by using the DCI starts to be received, t is a subframe in which transmission of a last TB in the plurality of TBs ends, p1 is time for decoding the DCI, and p2 is time for decoding the data.

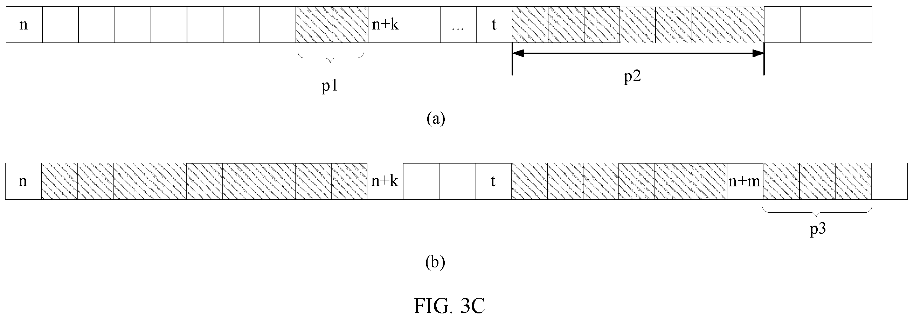

FIG. 3C is a diagram of a target time domain position according to an embodiment of this application. As shown in (a) in FIG. 3C, assuming that performing of multi-TB scheduling is indicated based on the first information and the second information, and the HARQ feedback configuration is providing no HARQ feedback, subframes identified by using slashes in the figure are subframes that are not included in the target time domain position, in other words, positions at which the network device does not deliver the DCI. The terminal device does not need to monitor the PDCCH at the target time domain position.

Specifically, n is the subframe in which the DCI is detected, and n+k is the subframe in which the data scheduled by using the DCI starts to be received. At least p1 subframes before the subframe in which the data starts to be received are used for decoding the received DCI, and monitoring does not need to be performed on the PDCCH. Therefore, the target time domain position does not include the subframe n+k-p1 to the subframe n+k-1. p1 may be 2. In other words, the time for decoding the DCI is 2 ms (milliseconds). Alternatively, P1 may be another value such as 1 ms or 4 ms. This is not limited in this embodiment of this application. Monitoring may be performed on the PDCCH in subframes after the subframe n in which the DCI is delivered and before the subframe for decoding the DCI (where the subframes are a subframe n+1 to a subframe n+k-p1-1). In addition, between the subframe n+k in which the terminal device starts to receive the data and the subframe t in which transmission of the last TB ends, because no HARQ feedback needs to be provided, after transmission of a part of the TBs ends, a process is released, and the network device may deliver new DCI. In this case, the terminal device may also monitor the PDCCH at a time domain position in this process. In p2 subframes after the subframe in which transmission of the last TB ends, the terminal device needs to decode data in the plurality of TBs, and does not monitor the PDCCH. In other words, the target time domain position does not include the subframe t+1 to the subframe t+p2. p2 may be 12. In other words, the time for decoding the data may be 12 ms. Alternatively, p2 may be another value such as 10 ms or 13 ms. This is not limited in this embodiment of this application.

Optionally, if the HARQ feedback configuration is providing a HARQ feedback, the target time domain position determined based on the first information and the second information does not include a subframe n to a subframe n+m+p3, where the subframe n is a subframe in which the DCI is detected, n+m is a subframe in which sending of the HARQ feedback ends, and p3 is time for decoding the HARQ feedback.

As shown in (b) in FIG. 3B, assuming that performing of multi-TB scheduling is indicated based on the first information and the second information, and the HARQ feedback configuration is providing a HARQ feedback, subframes identified by using slashes in the figure are subframes that are not included in the target time domain position, in other words, positions at which the network device does not deliver the DCI. The terminal device does not need to monitor the PDCCH at the target time domain position.

Specifically, the same as the foregoing descriptions, n is the subframe in which the DCI is detected, and n+k is a subframe in which data scheduled by using the DCI starts to be received. n+m is the subframe in which sending of the HARQ feedback ends. If the HARQ feedback configuration is providing a HARQ feedback, starting from the subframe n in which the terminal device detects the DCI to the subframe in which sending of the HARQ feedback by the terminal device ends (where the subframe n+k in which the terminal device starts to receive the data to a subframe t in which the terminal device ends receiving the data are included), because all processes are occupied by multi-TB scheduling, the network device determines, only after an ACK/NACK fed back by the terminal device is received and decoded by the network device, whether to schedule new data or retransmit data that is not correctly decoded by the terminal. In other words, in this process, the network device does not deliver new DCI. Therefore, none of the subframe n to the subframe n+m+p3 is included in the target time domain position. In other words, the terminal device does not need to monitor the PDCCH in the subframe range. p3 is the time in which the network device decodes the HARQ feedback, and may be 3 ms, 2 ms, or 4 ms. This is not specifically limited in this embodiment of this application. In other words, none of the subframe n to the subframe n+m+p3 is included in the target time domain position. The HARQ feedback may be specifically NPUSCH format2, and decoding the HARQ feedback may be decoding NPUSCH format2.

It should be noted that, in some cases, assuming that in X processes corresponding to scheduling for the X TBs, a HARQ feedback needs to be provided for a part of the processes, and no HARQ feedback needs to be provided for another part of the processes, when an ACK/NACK fed back in the part of process that requires a HARQ feedback is processed, the process that requires no HARQ feedback may be released, and the terminal device is allowed to monitor the PDCCH. In other words, the target time domain position corresponding to this case is the same as the target time domain position corresponding to the foregoing case in which the HARQ configuration is that no HARQ feedback needs to be provided.

After the terminal device determines, based on the HARQ feedback configuration, that a HARQ feedback needs to be provided, obtains data through decoding, and determines a HARQ feedback result, feedback results (ACKs/NACKs) of the X TBs (or the X processes) may be fed back separately, or may be fed back in a binding manner. This is not limited in this embodiment of this application.

It can be learned that, in this embodiment of this application, for multi-TB scheduling, if a HARQ feedback configuration for all processes is providing no HARQ feedback, the terminal device determines a time domain position at which monitoring is performed on a PDCCH, and excludes a time domain position used for transmitting the DCI, a time domain position used for transmitting the data scheduled by using the DCI, a time domain position used for decoding the DCI, and a time domain position used for decoding the data, to release the processes in advance and ensure data transmission efficiency. However, if the HARQ feedback configuration for all the processes is providing a HARQ feedback, the terminal device may determine not to monitor the PDCCH before feedback content is decoded by a network device, to improve efficiency for the terminal device to determine the target time domain position.

Optionally, when the HARQ feedback configuration is providing no HARQ feedback, if a MAC CE is transmitted by using a TB in the X TBs, it is determined that the HARQ feedback configuration is providing a HARQ feedback.

As described above, TA adjustment information is carried on the MAC CE, and a HARQ feedback needs to be provided for transmission of the MAC CE. In this case, assuming that the terminal device obtains that the HARQ feedback configuration corresponding to scheduling for the X TBs is providing no HARQ feedback, but the terminal device learns, based on a data header, that a TB is for transmitting the MAC CE, the terminal device discards the received HARQ feedback configuration, and considers that a HARQ feedback needs to be provided for the X TBs. Alternatively, assuming that a quantity of processes used for transmitting the X TBs is greater than 2, a process corresponding to the TB used for transmitting the MAC CE is separately determined as requiring a HARQ feedback, and a HARQ feedback configuration of a process for transmitting another TB is reserved as providing a HARQ feedback.

Optionally, when the second information is carried in the RRC, the method further includes: The network device sends the third information, where the third information is carried in the DCI and indicates whether to change the HARQ feedback configuration indicated by the second information. The terminal device receives the third information, and determines the target time domain position based on the first information and the change performed on the second indication information by using the third information.

The second information is carried in the RRC. To be specific, the HARQ feedback configuration for multi-TB scheduling is indicated by the RRC signaling. This is a semi-static indication manner. In some cases, the HARQ feedback configuration for multi-TB scheduling may be changed after scheduling for a part of the plurality of TBs is performed. In this case, the third information may be carried in the DCI and indicates whether to change the HARQ feedback configuration indicated by the RRC signaling. If the third information indicates to change the HARQ feedback configuration, providing a HARQ feedback indicated by the second information is changed to providing no HARQ feedback, or providing no HARQ feedback indicated by the second information is changed to providing a HARQ feedback. In a possible case, assuming that X>2 and 1<Y<X, the third information may indicate to change a part of the HARQ feedback configuration and not to change another part of the HARQ feedback configuration.

It can be learned that, in this embodiment of this application, the HARQ feedback configuration is first semi-statically indicated by the RRC, and then the HARQ feedback configuration is changed by using the indication information in the DCI, so that the HARQ feedback configuration can be indicated by using fewer resource overheads. In addition, the HARQ feedback configuration is changed by using the DCI as required, to ensure flexibility of indicating the HARQ feedback configuration.

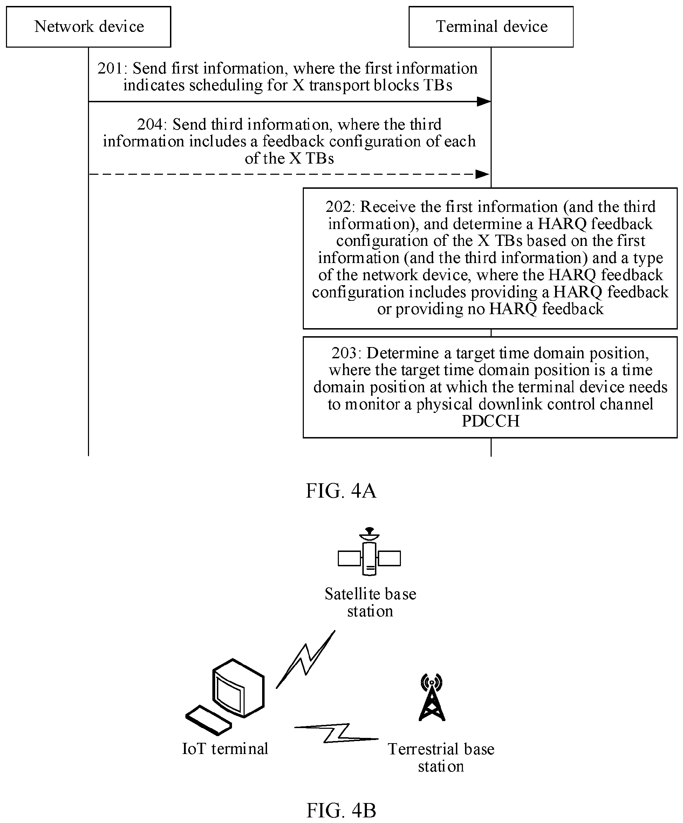

The foregoing is an implementation method for indicating the HARQ feedback configuration by using explicit indication information. Alternatively, the HARQ feedback configuration may be determined by using implicit information. For details, refer to FIG. 4A. FIG. 4A is a flowchart of another data transmission method according to an embodiment of this application. As shown in FIG. 4A, the method includes the following steps.

201: A network device sends first information, where the first information indicates scheduling for X transport blocks TBs.

The same as the foregoing embodiment, a terminal device in this embodiment of this application is also an IoT terminal. However, the network device in this embodiment of this application may be an NTN network device or a terrestrial (TN) network device that performs communication by using an IoT protocol. For details, refer to FIG. 4B. FIG. 4B is a diagram of a communication connection according to an embodiment of this application. As shown in FIG. 4B, the IoT terminal may communicate with a satellite base station, or may communicate with the satellite base station. The same as the descriptions in the embodiment in FIG. 3A to FIG. 3C, the first information indicates scheduling for the X TBs, and may be carried in DCI for sending. For details, refer to related descriptions of the first information. Details are not described herein again.

202: The terminal device receives the first information, and determines a HARQ feedback configuration of the X TBs based on the first information and a type of the network device, where the HARQ feedback configuration includes providing a HARQ feedback or providing no HARQ feedback.

The type of the network device is the satellite base station (the NTN network device) or the terrestrial base station (the TN network device) described above. In a communication process between the terminal device and the network device, scheduling for each TB in multi-TB scheduling may correspond to one process. In other words, scheduling for the X TBs corresponds to X processes. For communication between the terrestrial base station and the terminal device, a process of scheduling each TB may correspond to one HARQ feedback configuration. In other words, scheduling for the X TBs corresponds to X HARQ feedback configurations, and occupies X bits (where each HARQ feedback configuration occupies one bit, and when a value is 0, it may indicate that no HARQ feedback needs to be provided; or when a value is 1, it may indicate that a HARQ feedback needs to be provided). However, in a communication process between the satellite base station and the terminal device, a channel change is slow, and channels on which multi-TB scheduling is performed correspond to similar channel parameters and similar channel quality. Therefore, for the plurality of processes of multi-TB scheduling, the HARQ feedback configuration may be bound. For example, for the X processes corresponding to scheduling for the X TBs, one unified HARQ feedback configuration for the X processes may be determined.

Further, when determining that the type of the network device is a satellite base station, the terminal device may determine that the HARQ feedback configuration for scheduling for the X TBs is providing no HARQ feedback. This is because, for the satellite base station, RTT is very long, and a communication process is greatly affected. The HARQ feedback configuration may be set to providing no HARQ feedback, to reduce impact of the RTT during satellite communication.

Certainly, when determining that the type of the network device is a satellite base station, the terminal device may alternatively determine that the HARQ feedback configuration for scheduling for the X TBs is providing a HARQ feedback. In conclusion, the HARQ feedback configuration is a configuration applicable to the X processes corresponding to the X TBs.

In some cases, when determining that the type of the network device is a terrestrial base station, the terminal device may determine that the HARQ feedback configuration for scheduling for the X TBs is providing a HARQ feedback (or providing no HARQ feedback). This is not specifically limited in this embodiment of this application.

Optionally, before step 202 in this embodiment of this application, the method may further include step 204: The network device sends third information, where the third information indicates a HARQ feedback configuration of each of the X TBs. Correspondingly, that the terminal device determines the HARQ feedback configuration for scheduling for the X TBs based on the first information and the type of the network device in step 202 includes: The terminal device determines the HARQ feedback configuration for scheduling for the X TBs based on the first information, the third information, and the type of the network device.

Specifically, the network device may indicate, in a manner in the conventional technology, the HARQ feedback configuration corresponding to each TB. A difference lies in that the terminal device receives the first information, and determines that the network device performs multi-TB scheduling. In this case, the terminal device comprehensively determines the HARQ feedback configuration of the X TBs with reference to the first information, the third information, and the type of the network device.

When the type of the network device is a satellite base station, the terminal device may directly determine that the HARQ feedback configuration for scheduling for the X TBs is providing no HARQ feedback (or providing a HARQ feedback). Alternatively, the terminal device may determine the HARQ feedback configuration for scheduling for the X TBs, and use a HARQ feedback of one TB (for example, a first TB) configured in the third information as the HARQ feedback configuration for scheduling for the X TBs. Similarly, a HARQ feedback configuration of a part of the TBs (greater than one TB) in the configured X HARQ feedback configurations may also be used as the HARQ feedback configuration of the X TBs. For details, refer to the descriptions in step 104. Details are not described herein again.

When the type of the network device is a terrestrial base station, the terminal device may directly determine that the HARQ feedback configuration for scheduling for the X TBs is providing a HARQ feedback (or providing no HARQ feedback). Alternatively, the terminal device may determine that the HARQ feedback configuration for scheduling for the X TBs is subject to configuration content in the third information. Alternatively, the terminal device may determine the HARQ feedback configuration for scheduling for the X TBs, and use a HARQ feedback of a part of the TBs (greater than or equal to one TB) configured in the third information as the HARQ feedback configuration for scheduling for the X TBs, or the like.

It can be learned that, in this embodiment of this application, when receiving the HARQ feedback configuration of each TB in multi-TB scheduling, and receiving indication information for performing multi-TB scheduling, the terminal device may determine the HARQ feedback configuration for multi-TB scheduling with reference to the type of the network device. In this process, an existing HARQ feedback configuration process and information such as the type of the network device are fully used to determine a HARQ feedback configuration applicable to different communication scenarios. There is no need to perform any additional configuration and signaling indication for a process of determining the HARQ feedback configuration for multi-TB scheduling, to reduce signaling or resource overheads of the process.

203: The terminal device determines a target time domain position, where the target time domain position is a time domain position at which the terminal device needs to monitor a physical downlink control channel PDCCH.

After determining the HARQ feedback configuration, the terminal device may correspondingly determine the time domain position at which monitoring needs to be performed on the PDCCH, to ensure that plenty of communication time can be reserved for a HARQ feedback, and ensure that no missing detection occurs.

Optionally, if the HARQ feedback configuration is providing no HARQ feedback, the determined target time domain position does not include a subframe n+k-p1 to a subframe n+k-1 or a subframe t+1 to a subframe t+p2, where n is a subframe in which the DCI is detected, n+k is a subframe in which data scheduled by using the DCI starts to be received, t is a subframe in which transmission of a last TB in the plurality of TBs ends, p1 is time for decoding the DCI, and p2 is time for decoding the data.

For a manner of determining the target time domain position, refer to related descriptions in FIG. 3A to FIG. 3C. Details are not described herein again.

Optionally, if the HARQ feedback configuration is providing a HARQ feedback, the determined target time domain position does not include a subframe n to a subframe n+m+p3, where the subframe n is a subframe in which the DCI is detected, n+m is a subframe in which sending of the HARQ feedback ends, and p3 is time for decoding the HARQ feedback.

When the HARQ feedback configuration is providing a HARQ feedback, the terminal device may monitor the PDCCH after ending sending of the HARQ feedback and the network device completes decoding the HARQ feedback. Therefore, the target time domain position does not include the subframe n to the subframe n+m+p3. For details, refer to related descriptions in the embodiment in FIG. 3A to FIG. 3C. Details are not described herein again.

It can be learned that, in this embodiment of this application, when receiving an indication indicating to perform multi-TB scheduling, the terminal device determines the HARQ feedback configuration with reference to the type of the network device that sends the indication information, and mainly determines a HARQ feedback configuration for all corresponding processes in a multi-TB scheduling process for the satellite base station, to further determine the time domain position at which the terminal device monitors the PDCCH. In the process, for a communication process between the terminal device and the satellite base station, the HARQ feedback configuration can be determined without receiving additional HARQ feedback configuration information, thereby improving communication efficiency. In addition, it is determined that the HARQ feedback configuration of the satellite base station is providing no HARQ feedback, so that impact of RTT on the communication process can be reduced, thereby ensuring timeliness and accuracy of the communication process.

It should be noted that this embodiment may be combined with the foregoing embodiment in FIG. 3A to FIG. 3C. For example, the terminal device determines the feedback configuration of the X TBs based on the first information, the second information, and the type of the network device, and further determines the target time domain position. A specific implementation process is not described again in this embodiment of this application.

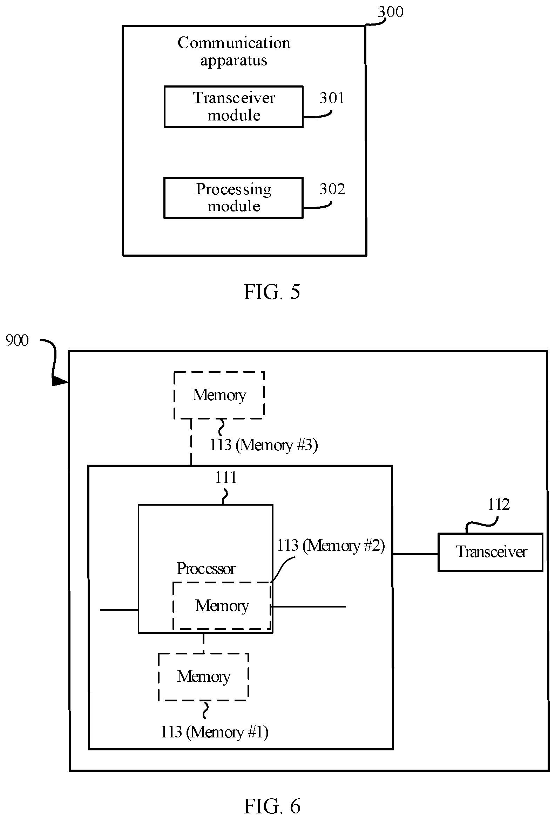

As shown in FIG. 5, a communication apparatus 300 includes a transceiver module 301 and a processing module 302. The communication apparatus 300 may be configured to implement functions of the terminal device or the network device in the method embodiment shown in FIG. 3A or FIG. 4A.

When the communication apparatus 300 is configured to implement the functions of the terminal device in the method embodiment shown in FIG. 3A,
the transceiver module 301 is configured to receive first information, where the first information indicates scheduling for X transport blocks TBs;
the transceiver module 301 is further configured to receive second information, where the second information indicates a HARQ feedback configuration of the X TBs, the HARQ feedback configuration includes providing a HARQ feedback or providing no HARQ feedback, the second information occupies Y bits, and Y<X; and
the processing module 302 is configured to determine a target time domain position based on the first information and the second information, where the target time domain position is a time domain position at which the terminal device needs to monitor a physical downlink control channel PDCCH.

When the communication apparatus 300 is configured to implement the functions of the network device in the method embodiment in FIG. 3A,
the transceiver module 301 is configured to send first information, where the first information indicates scheduling for X transport blocks TBs; and
the transceiver module 301 is further configured to send second information, where the second information indicates a HARQ feedback configuration of the X TBs, the HARQ feedback configuration includes providing a HARQ feedback or providing no HARQ feedback, the second information occupies Y bits, and Y<X.

When the communication apparatus 300 is configured to implement the functions of the terminal device in the method embodiment shown in FIG. 4A,
the transceiver module 301 is configured to receive first information from a network device, where the first information indicates scheduling for X transport blocks TBs;
the processing module 302 is configured to determine a HARQ feedback configuration of the X TBs based on the first information and a type of the network device, where the HARQ feedback configuration includes providing a HARQ feedback or providing no HARQ feedback; and
the processing module 302 is further configured to determine a target time domain position, where the target time domain position is a time domain position at which the terminal device needs to monitor a physical downlink control channel PDCCH.

For more detailed descriptions of the transceiver module 301 and the processing module 302, refer to related descriptions in the foregoing method embodiments. Details are not described herein again.

FIG. 6 is a diagram of a hardware structure of a communication apparatus according to an embodiment of this application. For the structure of the communication apparatus in FIG. 5, refer to the structure shown in FIG. 6. The communication apparatus 900 includes a processor 111 and a transceiver 112. The processor 111 and the transceiver 112 are electrically coupled.

The processor 111 is configured to execute a part or all of computer program instructions in a memory. When the part or all of the computer program instructions are executed, the apparatus is enabled to perform the method according to any one of the foregoing embodiments.

The transceiver 112 is configured to communicate with another device, for example, receive a message from a first network element. The message includes an identifier of a multicast and/or broadcast service, and a key of the multicast and/or broadcast service and/or a key identifier of the multicast and/or broadcast service.

Optionally, the apparatus further includes the memory 113, configured to store the computer program instructions. Optionally, the memory 113 (a memory #1) is located inside the apparatus, and the memory 113 (a memory #2) is integrated with the processor 111, or the memory 113 (a memory #3) is located outside the apparatus.

It should be understood that the communication apparatus 900 shown in FIG. 6 may be a chip or a circuit, for example, a chip or a circuit that can be disposed in a terminal apparatus or the communication apparatus. The transceiver 112 may alternatively be a communication interface. The transceiver includes a receiver and a transmitter. Further, the communication apparatus 900 may further include a bus system.

The processor 111, the memory 113, and the transceiver 112 are connected by using the bus system. The processor 111 is configured to execute the instructions stored in the memory 113, to control the transceiver to receive a signal and send a signal, to complete steps of a first device or a second device in the implementation method in this application. The memory 113 may be integrated into the processor 111, or may be disposed separately from the processor 111.

In an implementation, a function of the transceiver 112 may be implemented by using a transceiver circuit or a dedicated transceiver chip. It may be considered that the processor 111 is implemented by using a dedicated processing chip, processing circuit, or processor, or a universal chip. The processor may be a central processing unit (central processing unit, CPU), a network processor (network processor, NP), or a combination of the CPU and the NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (generic array logic, GAL) and another programmable logic device, a discrete gate or a transistor logic device, a discrete hardware component, or the like, or may be any combination thereof. The general-purpose processor may be a microprocessor, or the processor may be any conventional processor or the like.

It should be further understood that the memory mentioned in embodiments of this application may be a volatile memory or a non-volatile memory, or may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) serving as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory described in this application aims to include but is not limited to these memories and any memory of another proper type.

An embodiment of this application provides a computer storage medium, storing a computer program. The computer program includes instructions for performing the method corresponding to the terminal device in the foregoing embodiment.

An embodiment of this application provides a computer storage medium, storing a computer program. The computer program includes instructions for performing the method corresponding to the network device in the foregoing embodiment.

An embodiment of this application provides a computer program product including instructions. When the computer program product runs on a computer, the computer is enabled to perform the method corresponding to the terminal device in the foregoing embodiment.

An embodiment of this application provides a computer program product including instructions. When the computer program product runs on a computer, the computer is enabled to perform the method corresponding to the network device in the foregoing embodiment.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in the form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method comprises:
receiving, by a terminal device, first information, wherein the first information indicates scheduling for X transport blocks TBs;
receiving, by the terminal device, second information, wherein the second information indicates a HARQ feedback configuration of the X TBs, the HARQ feedback configuration comprises providing a HARQ feedback or providing no HARQ feedback, the second information occupies Y bits, and Y<X; and
determining, by the terminal device, a target time domain position based on the first information and the second information, wherein the target time domain position is a time domain position at which the terminal device needs to monitor a physical downlink control channel PDCCH.

2. The method according to claim 1, wherein X=2 and Y=1.

3. The method according to claim 1 or 2, wherein before the receiving, by the terminal device, second information, the method further comprises: receiving third information, wherein the third information comprises a feedback configuration of each of the X TBs, and
that the second information indicates a HARQ feedback configuration of the X TBs comprises: the second information indicates that a feedback configuration of a part of the X TBs is used as the HARQ feedback configuration of the X TBs.

4. The method according to any one of claims 1 to 3, wherein the first information is carried in downlink control information DCI, and the second information is carried in radio resource control RRC signaling.

5. The method according to any one of claims 1 to 3, wherein the first information and the second information are carried in DCI.

6. The method according to any one of claims 1 to 5, wherein if the HARQ feedback configuration is providing no HARQ feedback, the target time domain position determined based on the first information and the second information does not comprise a subframe n+k-p1 to a subframe n+k-1 or a subframe t+1 to a subframe t+p2, wherein n is a subframe in which the DCI is detected, n+k is a subframe in which data scheduled by using the DCI starts to be received, t is a subframe in which transmission of a last TB in the plurality of TBs ends, p1 is time for decoding the DCI, and p2 is time for decoding the data.

7. The method according to any one of claims 1 to 5, wherein if the HARQ feedback configuration is providing a HARQ feedback, the target time domain position determined based on the first information and the second information does not comprise a subframe n to a subframe n+m+p3, wherein the subframe n is a subframe in which the DCI is detected, n+m is a subframe in which sending of the HARQ feedback ends, and p3 is time for decoding the HARQ feedback.

8. The method according to any one of claims 1 to 4 or claims 6 and 7, wherein when the second information is carried in the RRC, the method further comprises:
receiving the third information, wherein the third information is carried in the DCI and indicates whether to change the HARQ feedback configuration indicated by the second information; and determining the target time domain position based on the first information and the change performed on the second indication information by using the third information.

9. A data transmission method, wherein the method comprises:
sending first information, wherein the first information indicates scheduling for X transport blocks TBs; and
sending second information, wherein the second information indicates a HARQ feedback configuration of the X TBs, the HARQ feedback configuration comprises providing a HARQ feedback or providing no HARQ feedback, the second information occupies Y bits, and Y<X.

10. The method according to claim 9, wherein X=2 and Y=1.

11. The method according to claim 9 or 10, wherein before the sending second information, the method further comprises: sending third information, wherein the third information comprises a feedback configuration of each of the X TBs, and
that the second information indicates a HARQ feedback configuration of the X TBs comprises: the second information indicates that a feedback configuration of a part of the X TBs is used as the HARQ feedback configuration of the X TBs.

12. The method according to any one of claims 9 to 11, wherein the first information is carried in downlink control information DCI, and the second information is carried in radio resource control RRC signaling.

13. The method according to any one of claims 9 to 11, wherein the first information and the second information are carried in DCI.

14. The method according to any one of claims 9 to 12, wherein the second information is carried in the radio resource control RRC signaling, and the method further comprises:
sending the third information, wherein the third information is carried in the DCI and indicates whether to change the HARQ feedback configuration indicated by the second information.

15. The method according to any one of claims 9 to 14, wherein before the sending first information, the method further comprises: determining that a multi-TB scheduling capability is configured for a terminal device by using RRC signaling.

16. A data transmission method, wherein the method comprises:
receiving, by a terminal device, first information from a network device, wherein the first information indicates scheduling for X transport blocks TBs;
determining a HARQ feedback configuration of the X TBs based on the first information and a type of the network device, wherein the HARQ feedback configuration comprises providing a HARQ feedback or providing no HARQ feedback; and
determining a target time domain position, wherein the target time domain position is a time domain position at which the terminal device needs to monitor a physical downlink control channel PDCCH.

17. The method according to claim 16, wherein the type of the network device is a satellite base station or a terrestrial base station.

18. The method according to claim 17, wherein if the type of the network device is a satellite base station, the HARQ feedback configuration is providing no HARQ feedback.

19. The method according to any one of claims 16 to 18, wherein if the HARQ feedback configuration is providing no HARQ feedback, the target time domain position does not comprise a subframe n+k-p1 to a subframe n+k-1 or a subframe t+1 to a subframe t+p2, wherein n is a subframe in which DCI is detected, n+k is a subframe in which data scheduled by using the DCI starts to be received, t is a subframe in which transmission of a last TB in the plurality of TBs ends, p1 is time for decoding the DCI, and p2 is time for decoding the data.

20. The method according to any one of claims 16 to 18, wherein if the HARQ feedback configuration is providing a HARQ feedback, the target time domain position does not comprise a subframe n to a subframe n+m+p3, wherein the subframe n is a subframe in which DCI is detected, n+m is a subframe in which sending of the HARQ feedback ends, and p3 is time for decoding the HARQ feedback.

21. A communication apparatus, comprising a module configured to perform the method according to any one of claims 1 to 20.

22. A communication apparatus, wherein a structure of the apparatus comprises a processor and may further comprise a memory, and the processor is coupled to the memory and may be configured to execute computer program instructions stored in the memory, to enable the apparatus to perform the method according to any one of claims 1 to 20.

23. A readable-storage medium, configured to store instructions, wherein the method according to any one of claims 1 to 20 is implemented when the instructions are executed.

24. A communication system, wherein the communication system comprises a terminal device and a network device, the terminal device is configured to perform the method according to any one of claims 1 to 8 or the method according to any one of claims 16 to 20, and the network device is configured to perform the method according to any one of claims 9 to 15.
